# EUROPÄISCHE PATENTANMELDUNG

(11) **EP 2 786 847 A1**
(43) Veröffentlichungstag der Anmeldung: **08.10.2014**
(21) Anmeldenummer: 14161948.6
(22) Anmeldetag: 27.03.2014
(51) Int. Cl.: B26D 3/16, B23D 21/14

(54) **Vorrichtung zum Ablängen von Fassadenankern**

(30) Priorität: 27.03.2013 DE 102013103174
(71) Anmelder: Wessendorf Systembeschichtungen GmbH, 49685 Emstek (DE)
(72) Erfinder: Wessendorf, Franz, 49685 Emstek (DE)
(74) Vertreter: Wickord, Wiro

(57) **Zusammenfassung**

Die Erfindung betrifft eine Vorrichtung zum Ablängen eines Fassadenankers mit einem in einen rohrförmigen Endabschnitt des Fassadenankers einführbaren Messer, wobei das Messer beweglich an einem in eine Längsrichtung erstreckten Schaft der Vorrichtung gehalten ist, mit Mitteln zum Zustellen des Messers in Richtung einer Rohrwandung des rohrförmigen Endabschnitts, mit Mitteln zum Rotieren des Schafts und des daran gehaltenen Messers um die Längsrichtung und mit Mitteln zum Festlegen einer axialen Grundposition des Messers beim Schneiden, wobei Führungsmittel für das Messer vorgesehen sind und dass das Messer über die Führungsmittel derart beweglich in Bezug zu dem Schaft festgelegt ist, dass das Messer allein radial zugestellt wird und/oder eine beim Ablängen gebildete stirnseitige Schnittfläche an dem Fassadenanker senkrecht zu einer Erstreckungsrichtung des rohrförmigen Endabschnitts orientiert ist.

## Beschreibung

Die Erfindung betrifft eine Vorrichtung zum Ablängen eines Fassadenankers mit einem in einen rohrförmigen Endabschnitt des Fassadenankers einführbaren Messer, wobei das Messer beweglich an einem in eine Längsrichtung erstreckten Schaft der Vorrichtung gehalten ist, mit Mitteln zum Zustellen des Messers in Richtung einer Rohrwandung des rohrförmigen Endabschnitts, mit Mitteln zum Rotieren des Schafts und des daran gehaltenen Messers um die Längsrichtung und mit Mitteln zum Festlegen einer axialen Grundposition des Messers beim Schneiden, sowie die Verwendung dieser Vorrichtung zum Zuschneiden von Fassadenankern für Wärmedämmverbundsysteme.

Fassadenanker werden vor dem Ausführen von Arbeiten an einer Bauwerksfassade an diese Fassade festgelegt, um mit ihrer Hilfe ein Gerüst, welches den Handwerkern die sichere Ausführung der Arbeiten erlaubt, an der Fassade festzulegen. Insbesondere beim Aufbau von Dämmfassaden verbleiben diese Anker in der Fassade, nachdem die Fassade gedämmt und eine letzte Fassadenschicht, beispielsweise eine Putzschicht, auf die Dämmung aufgebracht ist.

Die Fassadenanker sind hinsichtlich ihrer Geometrie in den seltensten Fällen exakt auf die Fassadendicke abgestimmt. Üblicherweise sind die heute verwendeten Fassadenanker derart kurz, dass die Dämmfassade über den Anker hinausragt und allein die in den Fassadenanker eingesetzte Ringschraube aus der Fassade hinausragt. Die Ringschraube wird dann beim Aufbringen des Außenputzes angeputzt, so dass der Außenputz beim Herausdrehen der Schraube beschädigt wird.

Soll ein Verkleben von Ringschraube und Außenputz verhindert werden, muss der Fassadenanker derart lang ausgebildet sein, dass der Anker aus der fertig verputzen Dämmfassade ragt. Der aus der Fassade ragende Teil des Ankers muss nach dem Aufbringen des Außenputzes und dem Herausdrehen der Ringschraube nicht zuletzt aus optischen Gründen entsprechend abgelängt werden. Da der Anker beim Festlegen des Gerüsts erhebliche Kräfte, insbesondere in der Fassadenoberfläche wirkende Querkräfte, aufnehmen muss, ist der Fassadenanker vergleichsweise stabil aufgebaut. Der Zuschnitt ist daher nicht ohne geeignete Hilfsmittel möglich. Beispielsweise kann zum Zuschnitt der rohrförmigen Endabschnitte ein handelsüblicher Rohrabschneider Verwendung finden, wie er beispielsweise in der EP 1 243 367 B1 beschrieben ist. Der Rohrabschneider mit einer Mehrzahl von Rundmessern umgreift den rohrförmigen Endabschnitt von außen. Durch Rotation des Rohrschneiders und gleichzeitige Zustellung der Rundmesser durchschneiden diese die Rohrwandung. Bei der Verwendung dieser vergleichsweise kostengünstigen und insbesondere im Installationshandwerk verbreiteten Rohrabschneider besteht jedoch das Risiko, dass die Fassade infolge der Rotation des Rohrabschneiders beschädigt wird. Überdies kann der Fassadenanker nicht flächenbündig zur Fassadenoberfläche eingeschnitten werden, da aufgrund der konstruktiven Gegebenheiten des Rohrabschneiders der Fassadenanker nach dem Zuschnitt wenigstens einige Millimeter über die Fassadenoberfläche hinausragt.

Aus der DE 16 02 503 A1 ist eine Schneidvorrichtung für Rohre bekannt, bei der ein Schneidmesser in das Rohr eingeführt und die Rohrwandung von innen geschnitten wird. Das Messer ist hierzu schwenkbar an einem schlanken Schaft gehalten. An dem Schaft ist eine betätigbare Kinematik ausgebildet, die es erlaubt, das Messer durch Schwenken desselben um eine quer zur Rohrmittelachse orientierte Schwenkachse mit der Rohrwandung in Eingriff zu bringen. Durch Rotation des Schafts mitsamt des daran gehaltenen Messers wird dann die Rohrwandung von innen geschnitten. Jedoch bildet sich aufgrund der Orientierung des Messers und der während des Zuschnitts ausgeführten Schwenkbewegung eine kegelsegmentförmige Schnittfläche. Eine radial zur Längsrichtung des rohrförmigen Endabschnitts eines Fassadenankers ausgebildete Schnittfläche kann mit der Vorrichtung nicht realisiert werden.

Aufgabe der vorliegenden Erfindung ist es daher, eine Vorrichtung zum Ablängen von Fassadenankern anzugeben, mit der der in der Fassade verbaute Fassadenanker vorzugsweise flächenbündig zu der Fassadenoberfläche eingekürzt werden kann. Eine Beschädigung der renovierten Fassadenoberfläche muss hierbei zuverlässig vermieden werden. Zugleich muss die Vorrichtung intuitiv und einfach zu bedienen sein.

Zur Lösung der Aufgabe ist die Erfindung in Verbindung mit dem Oberbegriff des Patentanspruchs 1 dadurch gekennzeichnet, dass Führungsmittel für das Messer vorgesehen sind und dass das Messer über die Führungsmittel derart beweglich in Bezug zu dem Schaft festgelegt ist, dass das Messer allein radial zugestellt wird und/oder eine beim Ablängen gebildete stirnseitige Schnittfläche an dem Fassadenanker senkrecht zu einer Erstreckungsrichtung des rohrförmigen Endabschnitts orientiert ist.

Der besondere Vorteil der Erfindung besteht darin, dass der an der Fassade festgelegte Fassadenanker unter Ausbildung einer eben und senkrecht zu einer Erstreckungsrichtung des rohrförmigen Endabschnitts eingelängt werden kann. Dies ist Voraussetzung dafür, dass der Fassadenanker trotz des Verbleibs in der renovierten Fassade von einem Betrachter kaum wahrgenommen und insbesondere nicht als optisch inakzeptabel störend empfunden werden. Insofern ist das exakte Einlängen der Fassadenanker ein wichtiges Qualitätsmerkmal bei der Herstellung hochwertige Gebäudefassaden. Insbesondere können Unebenheiten der Fassadenwand und Dickenunterschiede in der Dämmung individuell ausgeglichen werden.

Der mit der erfindungsgemäßen Vorrichtung eingelängte Fassadenanker kann beispielsweise abschließend mittels eines Verschlusselements verdeckt werden.

Indem eine Wandung des rohrförmigen Endabschnitts von innen geschnitten wird, ist einer Beschädigung der neu hergestellten Fassadenoberfläche wirksam vorgebeugt. Die Fassadenoberfläche kann insbesondere von außen an den Endabschnitt des Fassadenankers angeputzt werden. Ein in dem Fassadenanker gehaltenes Befestigungsmittel für das Gerüst, beispielsweise eine Ringschraube, kommt insofern mit dem Außenputz nicht in Berührung. Einer Verschmutzung des Befestigungsmittels und einer Beschädigung der neu hergestellten Fassade beim Entfernen des Befestigungsmittels ist damit wirksam vorgebeugt.

Kerngedanke der Erfindung ist es insofern, eine Vorrichtung zum Einlängen in der Fassade verbauter Fassadenanker bereitzustellen, die einen exakten Zuschnitt ermöglichen und eine Beschädigung der Fassade zuverlässig verhindern. Bei der erfindungsgemäßen Zuschneidevorrichtung handelt es sich demzufolge um ein Hilfsmittel für den Fassadenbeziehungsweise Gerüstbauer, der die Fassadenanker exakt und reproduzierbar auf das durch die Fassadenoberfläche vorgegebene Maß ablängen kann.

Nach einer bevorzugten Ausführungsform der Erfindung ist das Messer als ein Rundmesser realisiert. Das Rundmesser ist an dem Schaft derart gehalten, dass beim Rotieren des Schafts um die Längsachse desselben und beim Schneiden der Wandung des Endabschnitts das Rundmesser um die Symmetrieachse desselben rotiert. Insbesondere kann vorgesehen sein, dass das Rundmesser bezüglich einer Symmetrieachse desselben rotationssymmetrisch ausgebildet ist. Vorteilhaft kann durch das Vorsehen des Rundmessers die Schneidkraft reduziert und die Lebensdauer des Messers verlängert werden. Zugleich wird ein kontinuierlicher Schnitt ausgebildet, welcher die Qualität und insbesondere Ebenheit der an dem Endabschnitt ausgebildeten Schnittfläche verbessert.

Nach einer Weiterbildung der Erfindung ist als Mittel zum Einstellen der axialen Grundposition des Messers ein feststehender Anschlag vorgesehen mit einer außerhalb des Ankers ausgebildeten, an der Fassade anlegbaren Stützfläche. Vorteilhaft entfällt durch das Vorsehen des feststehenden Anschlags der Aufwand zum Einstellen der axialen Grundposition des Messers vor dem Schneiden. Vielmehr wird der Schnitt mithilfe der erfindungsgemäßen Vorrichtung immer an einer exakt gleichen, durch die Lage der Stützfläche des Anschlags definierten Position durchgeführt. Die Einlängung des Fassadenankers gestaltet sich insofern besonders einfach. Insbesondere können die Arbeiten vom Handwerker auch dann schnell und präzise durchgeführt werden, wenn der Handwerker Schutzhandschuhe trägt, die seine Bewegungsfreiheit beziehungsweise Motorik einschränken.

Beispielsweise kann der Schaft relativ beweglich zu dem die Stützflächen aufweisenden Anschlag vorgesehen sein. Vorteilhaft erlaubt es die Relativbeweglichkeit zwischen Schaft und Anschlag, den Anschlag an die Fassadenoberfläche anzulegen und eine die Oberfläche der Fassade unter Umständen schädigende Relativbewegung zwischen Stützfläche und Fassade zu vermeiden. Insofern rotiert beim Zuschnitt des rohrförmigen Endabschnitts der Schaft mit den Messern, während der Anschlag ruht.

Nach einer Weiterbildung der Erfindung ist die Stützfläche des Anschlags relativ zu den radial zustellbaren Messern derart angeordnet, dass die an dem Fassadenanker durch den Zuschnitt an dem Endabschnitt gebildete stirnseitige Schnittfläche sich in einer Oberflächenebene der Fassade erstreckt und/oder um weniger als 5 mm, bevorzugt um weniger als 2 mm, in Richtung der Fassadenwand zurückversetzt zu der Oberflächenebene der Fassade ausgebildet wird. Der besondere Vorteil der Erfindung besteht darin, dass durch die exakte Positionierung der Stützflächen relativ zu einer Messerschneide beziehungsweise der auszubildenden Schnittfläche ein immer gleiches, auf die vorbekannten geometrischen Verhältnismäßigkeiten ausgelegtes Verschlusselement zum Verschluss des in der Fassade verbleibenden Ankers vorgesehen werden kann. Das Verschlussmittel ragt zur Vermeidung von Feuchtigkeitseintrag in den Anker vorzugsweise randseitig über den Endabschnitt hinaus auf die Fassadenoberfläche. Gleichwohl kann ein Kopf des Verschlusselements sehr dünn ausgebildet sein, sodass die Fassade für den Betrachter weiterhin im Wesentlichen eben erscheint.

Nach einer Weiterbildung der Erfindung wird eine Mehrzahl von Messern vorgesehen, wobei die Mehrzahl von Messern an einem gemeinsamen Schaft gehalten ist und mittels der Mehrzahl von Messern an dem rohrförmigen Endabschnitt eine gemeinsame Schnittfläche ausgebildet wird. Vorteilhaft kann durch das Vorsehen der Messer der Schneidvorgang beschleunigt und die Abnutzung jedes einzelnen Messers reduziert werden. Gleichzeitig kann bei geeigneter Orientierung der Messer am Schaft das Einleiten von Querkräften in den Schaft beim Zuschnitt vermieden beziehungsweise reduziert werden. Beispielsweise können zwei auf gegenüberliegenden Seiten des Schafts vorgesehene Messer oder drei um 120° versetzt an dem Schaft festgelegte Messer vorgesehen werden.

Aus den weiteren Unteransprüchen und der nachfolgenden Beschreibung ergeben sich weitere Vorteile, Merkmale und Einzelheiten der Erfindung. Die in den Ansprüchen und in der Beschreibung erwähnten Merkmale können jeweils einzeln für sich oder in beliebiger Kombination erfindungswesentlich sein. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Figur 1: einen in einer Fassade verbauten Fassadenanker für ein Wärmedämmverbundsystem mit einer hierin vorgesehenen Ringschraube zum Festlegen eines Gerüsts an der Fassade,
- Figur 2: eine erfindungsgemäße Vorrichtung zum Ablängen des Fassadenankers nach Figur 1,
- Figur 3: eine Detailvergrößerung des Ausschnitts X nach Figur 2 und
- Figur 4: einen Einbauzustand des Fassadenanker nach seiner Ablängung.

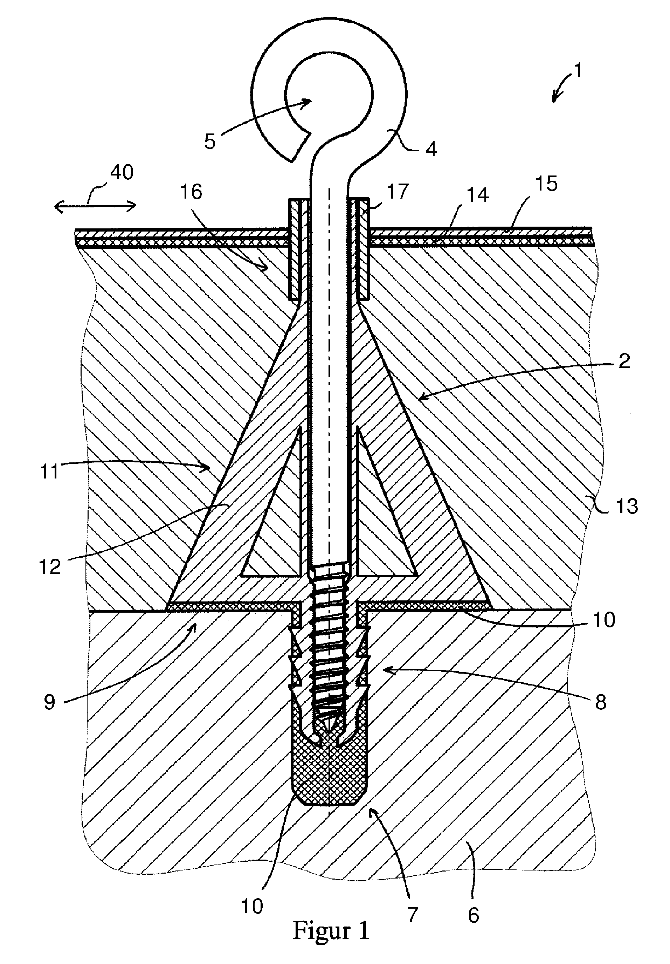

Figur 1 zeigt einen an einer Fassade 1 festgelegten Fassadenanker 2 und eine in einer Längsausnehmung 3 des Fassadenankers 2 vorgesehene Ringschraube 4. Die Ringschraube 4 dient zum Festlegen eines nicht dargestellten Gerüsts an der Fassade 1. Zu diesem Zweck greift ein Verbindungsmittel des Gerüsts, beispielsweise ein Verbindungshaken, in eine Ringausnehmung 5 der Ringschraube 4 ein.

Der Fassadenanker 2 wird zunächst an einer Fassadenwand 6 festgelegt. Hierzu wird an der Fassadenwand 6 eine Fassadenausnehmung 7 ausgebildet und der Fassadenanker 2 mit einem dübelartig ausgebildeten Einsetzabschnitt 8 in die Fassadenausnehmung 7 eingesetzt. Durch das Einschrauben der Ringschraube 4 in den Fassadenanker 2 wird der Einsetzabschnitt 8 gespreizt und der Fassadenanker 2 an der Fassadenwand 6 festgelegt. Dabei stützt sich der Fassadenanker 2 mit einer im Wesentlichen parallel zu einer Oberfläche der Fassadenwandung 6 erstreckten Anlagefläche 9 an der Fassadenwand 6 ab.

Zwischen der Fassadenwand 6 und der Anlagefläche 9 sowie in der Fassadenausnehmung 7 ist zur weiteren Verbesserung der Festlegung eine Verklebung mit einem Klebstoff 10 vorgesehen sein. Als Klebstoff 10 kommt beispielsweise ein selbst aushärtender Klebstoff 10 oder ein 2-Komponenten-Klebstoff 10 infrage.

Nachdem der Fassadenanker 2 an der Fassadenwand 6 festgelegt und das Gerüst aufgebaut ist, kann mit dem Aufbau einer Dämmschicht 13 sowie weiterer Fassadenschichten 14, 15 fortgefahren werden. Exemplarisch sind als weitere Fassadenschichten eine Gewebeschicht 14 und als äußere Fassadenschicht 15 eine auf die Gewebeschicht 14 aufgebrachter ein Außenputz 15 dargestellt.

Indem der Fassadenanker 2 in einem Mittelabschnitt 11 desselben mit Stützrippen 12 oder anderen Stützelementen versehen ist, können über die Ringschraube 4 eingeleitete Kräfte, insbesondere Querkräfte, im Bereich der Anlagefläche 9 an der Fassadenwand 6 abgestützt werden. Infolge der belastungsgerechten Gestaltung des Fassadenankers 2, insbesondere in dem Mittelabschnitt 11, wird insofern eine Knickung oder unzulässige plastische Verformung der Ringschraube 4 vermieden. Einer Beschädigung der Fassade 1 und insbesondere der neu hergestellten Dämmschicht 13 beim Entfernen der Ringschraube 4 aus dem Fassadenanker 2 ist insofern vorgebeugt.

Um zu verhindern, dass die Ringschraube 4 beim Herstellen des Wärmedämmverbundsystems und insbesondere beim Ausbilden des Außenputzes 15 verschmutzt und mit dem Außenputz 15 verklebt, ragt der Fassadenanker 2 mit einem rohrförmigen Endabschnitt 16 desselben aus der Fassade 1. Im Bereich des rohrförmigen Endabschnitts 16 ist der Fassadenanker 2 mit einem elastisch verformbaren Dichtkörper 17 umgeben. Der Dichtkörper 17 gewährleistet eine Abdichtung zwischen Fassadenanker 2 und Fassade 1.

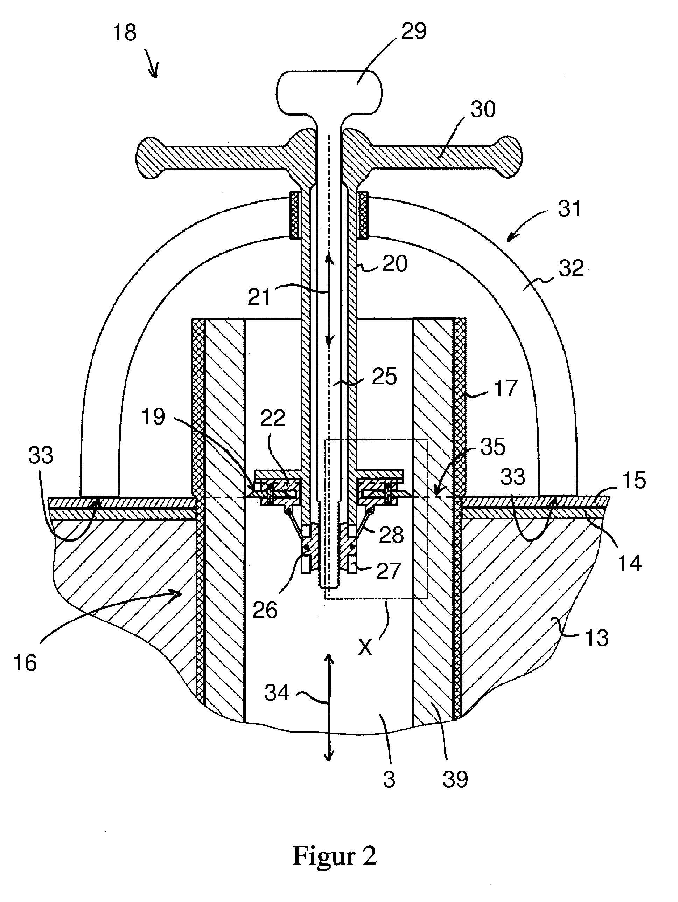

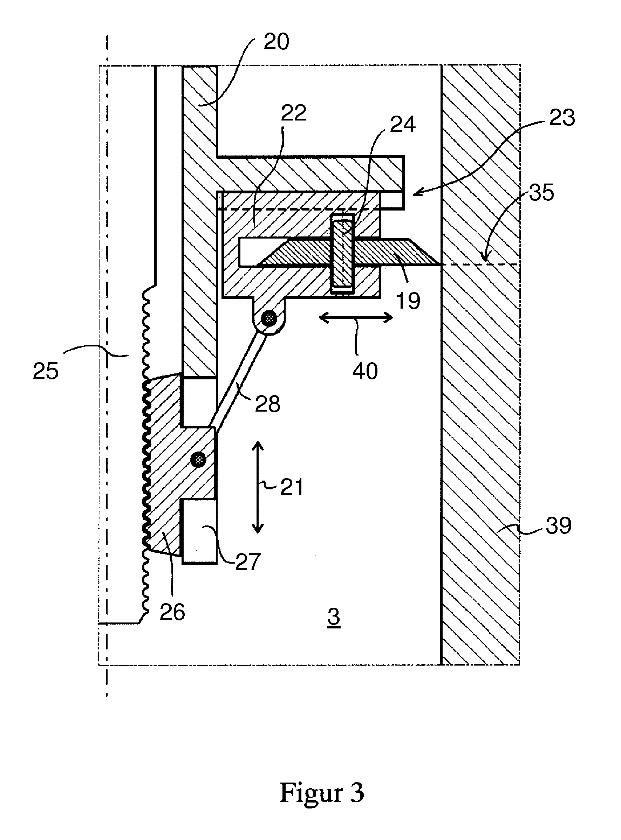

Um den rohrförmigen Endabschnitt 16 nach dem Herstellen der Fassade 1 einzukürzen, wird der rohrförmige Endabschnitt 16 mit einer erfindungsgemäßen Vorrichtung 18 zum Ablängen des Fassadenankers 2 gemäß der Figuren 2 und 3 eingekürzt. Die erfindungsgemäße Vorrichtung 18 umfasst eine Mehrzahl von Messern 19, welche an einem schlanken, langgestreckten Schaft 20 der Vorrichtung 18 beweglich gelagert sind. Der Schaft 20 wird mitsamt der daran gehaltenen Messer 19 in die Längsausnehmung 3 des Fassadenankers 2 eingeführt. Die Messer 19 sind senkrecht zu einer Längsrichtung 21 des Schafts 20 linear verschiebbar vorgesehen. Zu diesem Zweck ist an dem Schaft 20 einerseits und an einem den Messern 19 zugeordneten Messerhalter 22 andererseits eine Linearführung 23 ausgebildet. Weiter sind die Messer 19 in Bezug auf eine Symmetrieachse 24 derselben drehbar an dem Messerhalter 22 gelagert.

Zur Realisierung einer radialen Zustellbewegung der Messer 19 in Richtung einer Rohrwandung 39 des Endabschnitts 16 ist eine in dem Schaft 20 geführte Spindel 25 mit einer Spindelmutter 26 vorgesehen. Die Spindelmutter 26 steht zum einen im Eingriff mit einem Gewinde der Spindel 25. Darüber hinaus stützt sich die Spindelmutter 26 derart an einer Längsnut 27 des Schafts 20 ab, dass bei Rotation der Spindel 25 die Spindelmutter 26 eine Linearbewegung in die Längsrichtung 21 des Schafts 20 ausführt. Infolge der Längsbewegung der Spindelmutter 26 wird der über einen Gelenkhebel 28 mit der Spindelmutter 26 verbundene Messerhalter 22 in Radialrichtung verschoben und mit der Rohrwandung 39 in Eingriff gebracht.

Zur Rotation der Spindel 25 verfügt diese über ein Betätigungselement 29. Beispielsweise ist das Betätigungselement 29 flügelmutterartig ausgebildet. Ferner ist zur Rotation des Schafts 20 an demselben ein weiteres Betätigungselement 30, beispielsweise ein Betätigungshebel 30, vorgesehen. Das flügelmutterartige Betätigungselement 29 der Spindel 25 und der Betätigungshebel 30 des Schafts 20 können getrennt voneinander rotiert werden.

Um einen möglichst kompakten Aufbau der erfindungsgemäßen Zuschneidevorrichtung 18 zu erreichen, sind der Schaft 20 und die Spindel 25 koaxial zueinander orientiert. Die Messer 19, die zur Festlegung und Betätigung der Messer 19 erforderliche Linearführung 23 und der Messerhalter 22 sind dem Schaft 20 von außen zugeordnet. Die Spindelmutter 26 ist zumindest abschnittsweise innerhalb des Schafts 20 vorgesehen. Der Schaft 20 ist hierzu als Hohlschaft 20 ausgebildet.

Um den rohrförmigen Endabschnitt 16 des Fassadenankers 2 in Bezug zu der Fassade 1 exakt und reproduzierbar zuschneiden zu können, weist die Vorrichtung 18 einen Anschlag 31 auf. Der Anschlag 31 weist eine Mehrzahl von den rohrförmigen Endabschnitt 16 umgreifenden Stützarmen 32 sowie an den Stützarmen 32 endseitig ausgebildeten Stützflächen 33 auf. Die Stützflächen 33 befinden sich in einer definierten Position relativ zu den Messern 19. Insbesondere erstrecken sie sich in der dargestellten Arbeitsposition in einer gemeinsamen Ebene senkrecht zu der Erstreckungsrichtung 34 des Fassadenankers 2 in einer Oberflächenebene 40 der Fassade 1. Vorzugsweise ist die Vorrichtung 18 hinsichtlich der Konstruktion und Kinematik der Messer 19 so ausgelegt, dass eine durch den Zuschnitt an dem endseitigen Rohrabschnitt 16 ausgebildete stirnseitige Schnittfläche 35 in einer gemeinsamen Ebene mit den Stützflächen 33 und der Oberflächenebene 40 der Fassade 1 vorgesehen ist.

Nach einer alternativen, nicht dargestellten Ausführungsform der Erfindung können die Messer 19 geringfügig zurückversetzt zu den Stützflächen 33 vorgesehen sein, so dass die beim Zuschnitt gebildete Schnittfläche 35 geringfügig zurückversetzt gegenüber der Oberflächenebene 40 der Fassade 1 ausgebildet wird.

Gleiche Bauteile und Bauteilfunktionen sind durch gleiche Bezugszeichen gekennzeichnet.

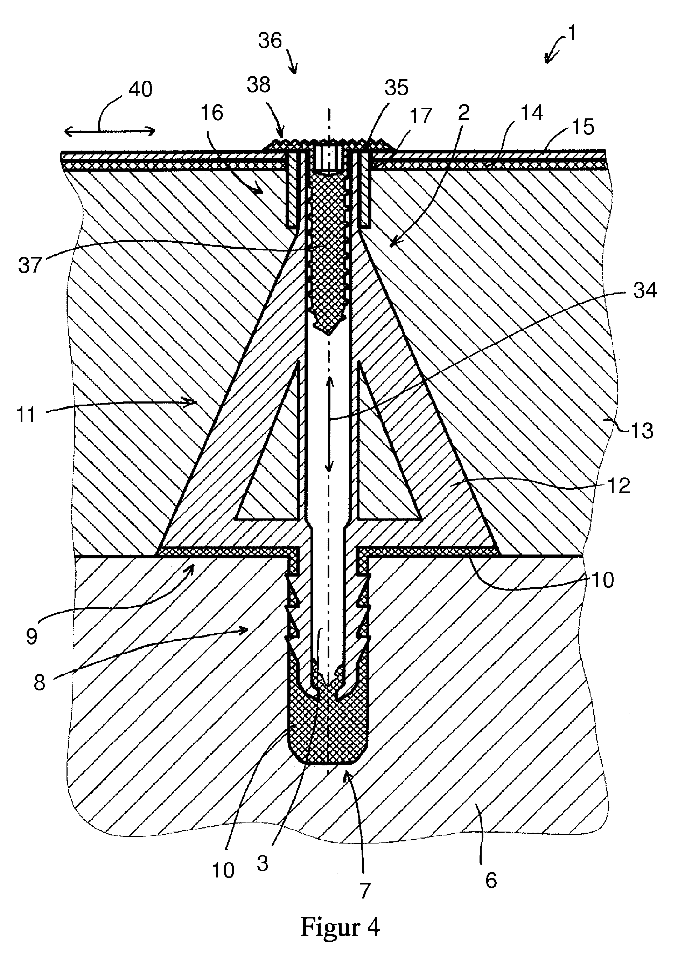

Figur 4 zeigt den in der Fassade 1 festgelegten Anker 2 nach dem Zuschnitt desselben mittels der erfindungsgemäßen Vorrichtung 18. Im Bereich der stirnseitigen Schnittfläche 35 ist die Längsausnehmung 3 des Fassadenankers 2 mittels eines schraubenartigen Verschlusselements 36 verschlossen. Das Verschlusselement 36 wird mit einem Gewindeschaft 37 in die Längsausnehmung 3 des Ankers 2 eingesetzt. Ein Kopfabschnitt 38 überdeckt den rohrförmigen Endabschnitt 16 und den Dichtkörper 17 stirnseitig und ragt bis auf den Außenputz 15. Der Eintrag von Feuchtigkeit in die Fassade 1 beziehungsweise den Fassadenanker 2 wird insofern verhindert.

Insofern erlaubt die erfindungsgemäße Vorrichtung 18 in Verbindung mit dem Fassadenanker 2 eine besonders vorteilhafte und hochwertige Fassadengestaltung. Zum einen ist einer Beschädigung des Außenputzes 15 und insbesondere dem Abbröckeln des Putzes 15 beim Herausdrehen der Ringschraube 4 aus dem Anker 2 zuverlässig vorgebeugt, indem der Fassadenanker 2 während der Herstellung der Dämmfassade 1 aus eben dieser herausragt und insofern ein Verkleben von Außenputz 15 und Ringschraube 4 verhindert wird. Zum anderen wird der Fassadenanker 2 dann in der Folge durch die Vorrichtung 2 mit der innenseitigen Schneide 19 sauber und eben zur Putzoberfläche 40 abgelängt, so dass nur eine geringe Öffnung zurückbleibt. Die Öffnung kann anschließend durch den entsprechenden Stopfen (Verschlusselement 36) verschlossen wird.

Die in den Figuren gezeigte Ausführungsform der Erfindung ist lediglich exemplarisch. Insbesondere kann der verwendete Anker 2 eine andere Geometrie aufweisen als dargestellt. Es kann beispielsweise ein rohrförmiger Anker 2 vorgesehen werden. Ebenfalls exemplarisch ist die Verwendung des Fassadenankers 2 für Wärmedämmverbundsysteme. Beispielsweise können beliebige andere Fassaden unter Verwendung eines jeweils geeigneten Fassadenankers hergestellt werden. Ebenso kann die erfindungsgemäße Vorrichtung für verschiedene Ankerwerkstoffe ausgebildet sein. Beispielsweise kann der Fassadenanker 2 aus einem Kunststoff beziehungsweise aus einem faserverstärkten Kunststoff hergestellt werden. Ebenso kann der Anker 2 aus einem metallischen Werkstoff hergestellt sein. Jeweils können die Messer 19 hinsichtlich ihres Werkstoffs und ihrer Schneidengeometrie auf den Werkstoff des Ankers 2 angepasst werden.

## Patentansprüche

1. Vorrichtung (18) zum Ablängen eines Fassadenankers (2) mit einem in einen rohrförmigen Endabschnitt (16) des Fassadenankers (2) einführbaren Messer (19), wobei das Messer (19) beweglich an einem in eine Längsrichtung (21) erstreckten Schaft (20) der Vorrichtung (18) gehalten ist, mit Mitteln zum Zustellen des Messers (19) in Richtung einer Rohrwandung (39) des rohrförmigen Endabschnitts (16), mit Mitteln zum Rotieren des Schafts (20) und des daran gehaltenen Messers (19) um die Längsrichtung (21) und mit Mitteln zum Festlegen einer axialen Grundposition des Messers (19) beim Schneiden, **dadurch gekennzeichnet, dass** Führungsmittel (23) für das Messer (19) vorgesehen sind und dass das Messer (19) über die Führungsmittel (23) derart beweglich in Bezug zu dem Schaft (20) festgelegt ist, dass das Messer (19) allein radial zugestellt wird und/oder eine beim Ablängen gebildete stirnseitige Schnittfläche (35) an dem Fassadenanker (2) senkrecht zu einer Erstreckungsrichtung (34) des rohrförmigen Endabschnitts (16) orientiert ist.

2. Vorrichtung (18) nach Anspruch 1, **dadurch gekennzeichnet, dass** das Messer (19) als ein Rundmesser (19) ausgebildet ist, welches derart gehalten ist, dass beim Rotieren des Schafts (20) um die Längsachse und Schneiden einer Rohrwandung (39) des Endabschnitts (16) das Rundmesser (19) um die Symmetrieachse (24) gedreht wird.

3. Vorrichtung (18) nach Anspruch 1 oder 2, **dadurch gekennzeichnet, dass** als Mittel zum Festlegen der in die Längsrichtung (21) bestimmten axialen Grundposition des Messers (19) ein feststehender Anschlag (31) vorgesehen ist mit einer von außen an die Fassade (1) anlegbaren Stützfläche (33).

4. Vorrichtung (18) nach einem der Ansprüche 1 bis 3, **dadurch gekennzeichnet, dass** die Stützfläche (33) des Anschlags (31) relativ zu den radial zustellbaren Messern (19) derart angeordnet ist, dass die an dem Fassadenanker (2) durch den Zuschnitt gebildete stirnseitige Schnittfläche (35) sich in einer Oberflächenebene (40) der Fassade (1) erstreckt und/oder um weniger als 5 mm, bevorzugt um weniger als 2 mm, zurückversetzt zu der Oberflächenebene (40) der Fassade (1) ausgebildet ist.

5. Vorrichtung (18) nach einem der Ansprüche 1 bis 4, **dadurch gekennzeichnet, dass** zur Realisierung der radialen Zustellung der Messer (19) Mittel zum Wandeln der Rotationsbewegung des Schafts (20) in eine erste Linearbewegung vorgesehen sind, wobei die erste Linearbewegung in Längsrichtung (21) des Schafts (20) erfolgt, und dass weiterhin Mittel zum Wandeln der ersten Linearbewegung in die radiale Zustellbewegung des Messers (19) vorgesehen sind.

6. Vorrichtung (18) nach einem der Ansprüche 1 bis 5, **dadurch gekennzeichnet, dass** eine Mehrzahl von Messern (19) vorgesehen ist, wobei die Mehrzahl von Messern (19) an einem gemeinsamen Schaft (20) derart gehalten ist, dass mittels der Mehrzahl der Messer (19) an dem rohrförmigen Endabschnitt (16) eine gemeinsame Schnittfläche (35) ausbildbar ist.

7. Vorrichtung (18) nach einem der Ansprüche 1 bis 6, **dadurch gekennzeichnet, dass** die Mehrzahl von Messern (19) derart verteilt angeordnet und an dem Schaft (20) gehalten ist, dass der Schaft (20) beim Zuschnitt des Endabschnitts (16) querkraftfrei ist.

8. Vorrichtung (18) nach einem der Ansprüche 1 bis 7, **dadurch gekennzeichnet, dass** der Schaft (20) relativbeweglich zu dem Anschlag (31) angeordnet ist.

9. Vorrichtung (18) nach einem der Ansprüche 1 bis 8, **dadurch gekennzeichnet, dass** der Schaft (20) als ein Hohlschaft (20) ausgebildet ist und dass in dem Hohlschaft (20) wenigstens ein Teil der Mittel zum Wandeln der Rotationsbewegung des Schafts (20) in die erste Linearbewegung vorgesehen ist.

10. Verwendung einer Vorrichtung (18) nach einem der Ansprüche 1 bis 9 zum Zuschneiden eines Fassadenankers (2), insbesondere eines permanenten Fassadenankers (2), für Wärmedämmverbundsysteme.
